# EUROPEAN PATENT APPLICATION

(11) **EP 4 756 569 A1**
(43) Date of publication of application: **10.06.2026**
(21) Application number: 25218526.9
(22) Date of filing: 26.11.2025
(51) Int. Cl.: G06F 1/24, G06F 1/16

(54) **ELECTRONIC DEVICE, METHOD OF ELECTRONIC DEVICE, AND PROGRAM**

(30) Priority: 03.12.2024 JP 2024210089
(71) Applicant: Casio Computer Co., Ltd., Tokyo 151-8543 (JP)
(72) Inventor: MIYAZAWA, Takeru, Tokyo, 205-8555 (JP)
(74) Representative: Plougmann Vingtoft a/s

(57) **Abstract**

An electronic device (1) includes a display (50), an action receiver (60), and at least one processor (10). The at least one processor receives certain command actions in a state where the electronic device operates in a certain initialization mode. In response to the command actions being performed on the action receiver in a certain order in the initialization mode, the at least one processor executes an initialization process of initializing the electronic device. Each time at least part of the command actions is performed in the certain order, the at least one processor causes the display to perform certain indication.

## Description

### BACKGROUND OF THE INVENTION

### TECHNICAL FIELD

The present disclosure relates to an electronic device, a method of an electronic device, and a program.

### DESCRIPTION OF RELATED ART

A known electronic device is configured to execute an initialization process to initialize itself (for example, see Japanese Unexamined Patent Application Publication No. 2008-241329). If the electronic device is configured to execute the initialization process in response to simple actions, a user may unintentionally initialize the electronic device by mishandling. To prevent initialization by mishandling, execution of the initialization process usually requires complex actions to some degree.

### SUMMARY OF THE INVENTION

However, the user may find it difficult to perform complex actions for initialization without any assistance.

An object of this disclosure is to assist the user in performing actions for initialization.

To achieve the above object, according to the present disclosure, an electronic device includes: a display; an action receiver; and at least one processor, wherein: the at least one processor receives certain command actions in a state where the electronic device operates in a certain initialization mode; in response to the command actions being performed on the action receiver in a certain order in the initialization mode, the at least one processor executes an initialization process of initializing the electronic device, and each time at least part of the command actions is performed in the certain order, the at least one processor causes the display to perform certain indication.

### ADVANTAGEOUS EFFECTS OF THE INVENTION

According to this disclosure, it is possible to assist the user in performing actions for initialization.

### BRIEF DESCRIPTION OF DRAWINGS

FIG. 1 shows the appearance of an electronic timepiece.
FIG. 2 is a block diagram showing a functional configuration of the electronic timepiece.
FIG. 3 shows the contents of command action setting data.
FIG. 4 shows display operation by an analog display in an initialization mode.
FIG. 5 shows display operation by a digital display in the initialization mode.
FIG. 6 is a flowchart showing the control procedure of an initialization control process.
FIG. 7 shows an example of invalidity indication in a modification example 1.
FIG. 8 shows the contents of the command action setting data in a modification example 2.
FIG. 9 shows an example of command actions in the modification example 2.
FIG. 10 shows an example of command actions in the modification example 2.
FIG. 11 shows an example of command actions in the modification example 2.
FIG. 12 shows display operation by the analog display in a modification example 3.
FIG. 13 shows display operation by the digital display in the modification example 3.

### DETAILED DESCRIPTION

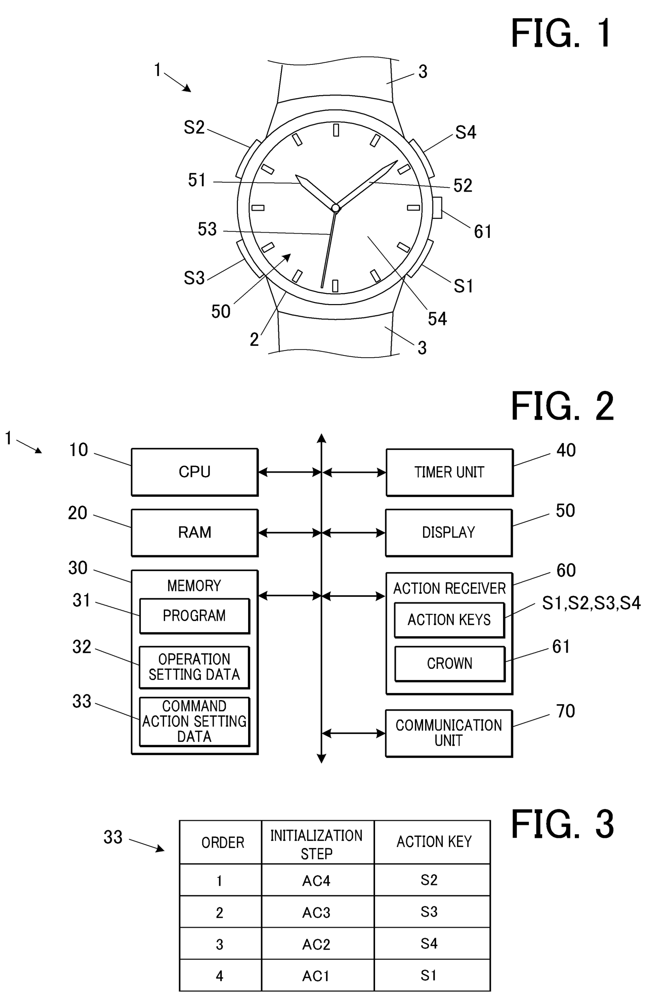

Hereinafter, an embodiment of the present disclosure is described based on the figures. As shown in FIG. 1, an electronic timepiece 1 (electronic device) includes: a casing 2 that houses a display 50 and other components; and two bands 3 attached to the casing 2. The electronic timepiece 1 is a wristwatch to be worn on the user's wrist by winding the bands 3 around the wrist. FIG. 1 shows an example of the electronic timepiece 1 that indicates time and other information in an analog format on a display 50. The display 50 includes an hour hand 51, a minute hand 52, a second hand 53, and a dial 54. Hereinafter, the hour hand 51, minute hand 52, and second hand 53 may be collectively referred to as hands 51 to 53. The electronic timepiece 1 may include a digital display 50 that displays various kinds of information in a digital format on a display panel, such as a liquid crystal display panel. The display 50 may include the hands and the display panel to display information in analog and digital formats. On the lateral side of the casing 2, four action keys S1 to S4 and a crown 61 are provided. Hereinafter, any one of the action keys S1 to S4 is referred to as an action key S. The action key S is a key switch that detects a press. The action key S1 is located at the four o'clock position (lower right) of the dial 54 on the side of the casing 2. The action key S2 is located at the ten o'clock position (upper left) of the dial 54 on the side of the casing 2. The action key S3 is located at the eight o'clock position (lower left) of the dial 54 on the side of the casing 2. The action key S4 is located at the two o'clock position (upper right) of the dial 54 on the side of the casing 2.

As shown in FIG. 2, the electronic timepiece 1 includes a central processing unit (CPU) 10 (processor), a random access memory (RAM) 20, a memory 30, a timer unit 40, the display 50, an action receiver 60, and a communication unit 70. The components of the electronic timepiece 1 are connected via a data transmission path, such as a bus. The CPU 10 is a processor that controls operations of electronic timepiece 1 by reading and executing a program 31 stored in the memory 30 and performing various arithmetic operations. The CPU 10 is an example of "at least one processor". The electronic timepiece 1 may include multiple processors (e.g., multiple CPUs), and the multiple processors may execute processes of the CPU 10 of this embodiment. In this case, at least one processor consists of multiple processors. In this case, the multiple processors may be involved in a common process or may independently execute different processes in parallel. The RAM 20 provides the CPU 10 with working memory space and stores temporary data. The memory 30 is a non-transitory recording medium readable by the CPU 10 as a computer and stores the program 31 and various kinds of data. The memory 30 includes a nonvolatile memory, such as flash memory, for example. The program 31 is stored in the memory 30 in the form of a computer-readable program code. The data stored in the memory 30 includes operation setting data 32 and command action setting data 33. The operation setting data 32 includes the contents of various operation settings of the electronic timepiece 1. Examples of items regarding the operation settings include: ON/OFF of an alarm function, alarm time, time for which a timer is set, home city, world time cities, daylight saving time setting, setting information related to manual time correction by the user, and identification information of paired external devices. The contents of the operation setting data 32 are changed as necessary in response to user actions of changing the operation settings of the electronic timepiece 1. The contents of the command action setting data 33 are described later.

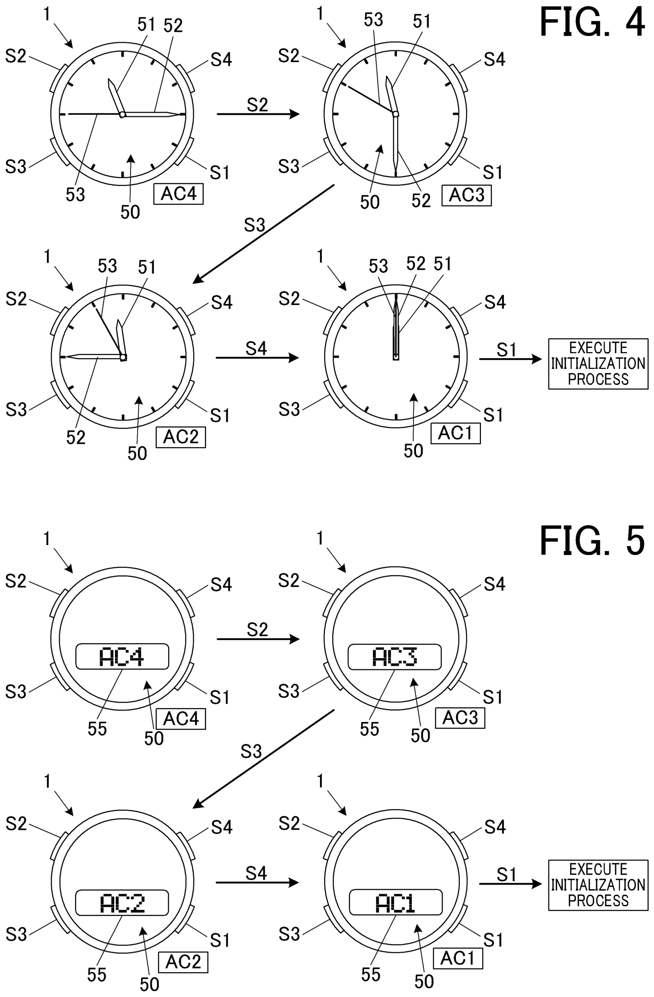

The timer unit 40 includes an oscillator circuit, a frequency divider circuit, and a timer circuit. In the timer unit 40, the oscillation circuit generates a clock signal, the frequency divider circuit divides the clock signal, and the timer circuit counts the divided signals to calculate and keep the current date and time. The display 50 displays information, such as time, date, and day of the week in accordance with control signals sent by the CPU 10. The analog display 50 includes a mechanism and a drive circuit for rotating the hands 51 to 53, in addition to the hands 51 to 53 and the dial 54 shown in FIG. 1. The display 50 may include a non-illustrated date indicator that indicates the date and/or a non-illustrated sub dial (small dial) having a functional hand for indicating the day of the week, an operation mode, or the like. The digital display 50 includes a display panel 55 (see FIG. 5), such as a liquid crystal panel that performs display by segment display and/or dot matrix display, and a drive circuit of the display panel 55. The action receiver 60 includes the action keys S1 to S4 and the crown 61 shown in FIG. 1. The action receiver 60 outputs, to the CPU 10, an action signal that includes information for identifying the pressed key S or information for identifying the amount of rotation of the crown 61. The communication unit 70 is a communication module that includes an antenna, a modulation and demodulation circuit, and a signal processing circuit. The communication unit 70 sends and receives data to and from an external terminal device by short-range wireless communication, such as Bluetooth (registered trademark).

Next, operation of the electronic timepiece 1 is described. The CPU 10 of the electronic timepiece 1 in this embodiment can execute an initialization process to initialize the electronic timepiece 1. Initialization means resetting the software of the electronic timepiece 1. In other words, initialization means restoring the electronic timepiece 1 to the state of factory settings. Initialization is also referred to as "all clear" (AC). In this embodiment, initialization refers to restoring the operation setting data 32 to its initial state. The electronic timepiece 1 in this embodiment can be initialized in response to user actions. Since initialization can be done in response to user actions, the user can initialize the electronic timepiece 1 at hand without sending or bringing the electronic timepiece 1 to the manufacturer. Thus, the user can reduce time and effort for initialization. On the other hand, if the initialization process can be done by simple actions, the user may unintentionally initialize the electronic timepiece 1 by mishandling. To avoid initialization by mishandling as much as possible, the electronic timepiece 1 in this embodiment is configured to execute the initialization process only when multiple actions are performed according to a certain (or predetermined) procedure. Hereinafter, the procedure for executing the initialization process is described.

The initialization process is executed when certain (or predetermined) command actions are performed on the action keys S1 to S4 in a certain (or predetermined) order in a state where the electronic timepiece 1 is in a certain (or predetermined) initialization mode (AC mode). Transition of the electronic timepiece 1 to the initialization mode requires complex actions that are unlikely to be performed when the user is using the electronic timepiece 1 in a normal manner. Both the actions for transitioning to the initialization mode and the command actions required after transition to the initialization mode are determined such that they are unlikely to be performed accidentally by mishandling. Therefore, the possibility of unintentional execution of the initialization process is extremely low.

In this embodiment, the actions for the electronic timepiece 1 to transition to the initialization mode are as follows. First, the user causes the electronic timepiece 1 to transition to a current month setting state in a current date setting mode. Then, in the state where the setting content is kept at a specific month (any month from January to December (e.g., January)), the user keeps holding (pressing) the action key S1 for ten seconds (predetermined time). This causes the electronic timepiece 1 to transition to the initialization mode. The current month setting function is normally provided to all models. The action key S1 is a basic action key S provided even to a model having less action keys S. According to the above method, different models can follow the same method for transitioning to the initialization mode. This can reduce software designing burden for each model. Especially for the digital electronic timepiece 1, holding the action key S1 in the month setting is often assigned the function of fast-forwarding the month numbers from 1 to 12. Since holding the action key S1 for ten seconds leads to repeating fast-forwarding the month numbers from 1 to 12 multiple times (e.g., 5 to 10 times), such an action is not usually performed. Further, the action key S1 must be held in the state where the setting content is at a specific month. This reduces the probability of unintentionally performing actions for transitioning to the initialization mode to one-twelfth (1/12). The actions for transitioning to the initialization mode are not limited to the above and may be any other actions that are unlikely to be performed when the user is using the electronic timepiece 1 in a normal manner.

After the electronic timepiece 1 transitions to the initialization mode, the initialization process is executed when multiple command actions are performed in a certain order. Each of the command actions is an action of pressing a specific action key S among the action keys S1 to S4. In this embodiment, four command actions are required to execute the initialization process. The action keys S corresponding to the respective command actions and the order thereof are determined beforehand and registered in the command action setting data 33. As shown in FIG. 3, the four command actions in this embodiment are defined as pressing the action keys S2, S3, S4, and S1 in this order. Hereinafter, the state in which each command action is to be received in the initialization mode is referred to as an initialization step. In the initialization mode, four initialization steps of AC4, AC3, AC2, and AC1 must be followed to execute the initialization process. In each of the initialization steps AC4 to AC1, only one action key S corresponds to a correct command action to proceed to the next initialization step. In the last initialization step AC1, the action key S corresponds to a correct command action to execute the initialization process. If an action key S other than the set corresponding action key S is pressed in each initialization step, the initialization mode ends. Thus, the initialization actions are not easily performed. The last command action may be an action of holding the action key S1 for a predetermined period (e.g., ten seconds).

When the electronic timepiece 1 includes the analog display 50, the display 50 in the initialization mode performs indication as shown in FIG. 4. In the initialization mode, each time a command action is performed in a certain order, the hands 51 to 53 indicate certain positions. These certain positions are determined such that the hands 51 to 53 come closer to a certain end position each time the number of unperformed command actions among the four command actions decreases. In the example shown in FIG. 4, the end position is the 12 o'clock position. Specifically, in the initialization step AC4 immediately after transition to the initialization mode, the hour and minute hands 51 and 52 indicate 11:15, and the second hand 53 indicates 45 seconds. When the action key S2 corresponding to the correct command action in the initialization step AC4 is pressed, the electronic timepiece 1 proceeds to the initialization step AC3. In the initialization step AC3, the hour and minute hands 51 and 52 indicate 11:30, and the second hand 53 indicates 50 seconds. When the action key S3 corresponding to the correct command action in the initialization step AC3 is pressed, the electronic timepiece 1 proceeds to the initialization step AC2. In the initialization step AC2, the hour and minute hands 51 and 52 indicate 11:45, and the second hand 53 indicates 55 seconds. When the action key S4 corresponding to the correct command action in the initialization step AC2 is pressed, the electronic timepiece 1 proceeds to the initialization step AC1. In the initialization step AC1, the hands 51 to 53 all indicate the 12 o'clock position. When the action key S1 corresponding to the correct command action in the initialization step AC1 is pressed, the initialization process is executed. Thus, each time the correct command action is performed in each of the initialization steps AC4, AC3, and AC2 in the initialization mode, the hands 51 to 53 are all rotated to approach the 12 o'clock position in their rotation direction. The indication in each initialization step corresponds to the number of unperformed command actions. When the hands 51 to 53 are likened to a counter, it can be said that the hands 51 to 53 perform indication (certain indication) of a count value of the counter that decreases each time a correct command action is performed in the initialization steps of AC4, AC3, and AC2. The correct command actions in the initialization steps of AC4, AC3, and AC2 correspond to "at least part of command actions". The "part of command actions" may be rephrased as "two or more consecutive command actions". When the correct command action is performed in the initialization step AC1, namely when the initialization process is to be executed, corresponding certain indication may be performed.

The indication by the display 50 in the initialization mode is not limited to the example in FIG. 4. For example, in the initialization steps of AC4 to AC1, the hour hand 51 and the minute hand 52 may indicate 11:00, 11:15, 11:30, and 11:45, respectively, and the second hand 53 may indicate 40, 45, 50, and 55 seconds, respectively. When the command action of pressing the action key S1 is performed in the initialization step AC1, all the hands 51 to 53 may indicate the 12 o'clock direction.

When the electronic timepiece 1 includes the digital display 50, the display 50 performs indication as shown in FIG. 5 in the initialization mode. In the digital format, the display 50 also performs indication of the count value of the counter that decreases each time one of the four command actions is performed. Specifically, letters "AC4", "AC3", "AC2", and "AC1" are displayed by the display panel 55 in the respective initialization steps AC4 to AC1. The number included in the indication in each initialization step corresponds to the number of unperformed command actions at the point of time. Therefore, the indication in each initialization step corresponds to the number of unperformed command actions. Thus, each time the correct command action is performed in the initialization steps AC4, AC3, and AC2, the display panel 55 performs certain indication. When the correct command action is performed in the initialization step AC1, namely when the initialization process is to be executed, corresponding certain indication may be performed (e.g., display of the letter "AC"). The indication by the display 50 in the initialization mode is not limited to the example of FIG. 5 and may be any indication that corresponds to the initialization step at the point of time. For example, the display 50 may display a numerical value indicating the number of the initialization step at that point of time in the entire order. That is, the display 50 may indicate the counter value of the counter that increases each time the command action is performed in the certain order.

When the electronic timepiece 1 is a combination model capable of displaying information in both analog and digital formats, the electronic timepiece 1 may perform both types of indication in FIG. 4 and FIG. 5. Further, the number of command actions required to execute the initialization process may not correspond to the number of action keys S (four). The number of necessary command actions may be less than or greater than the number of action keys S (four).

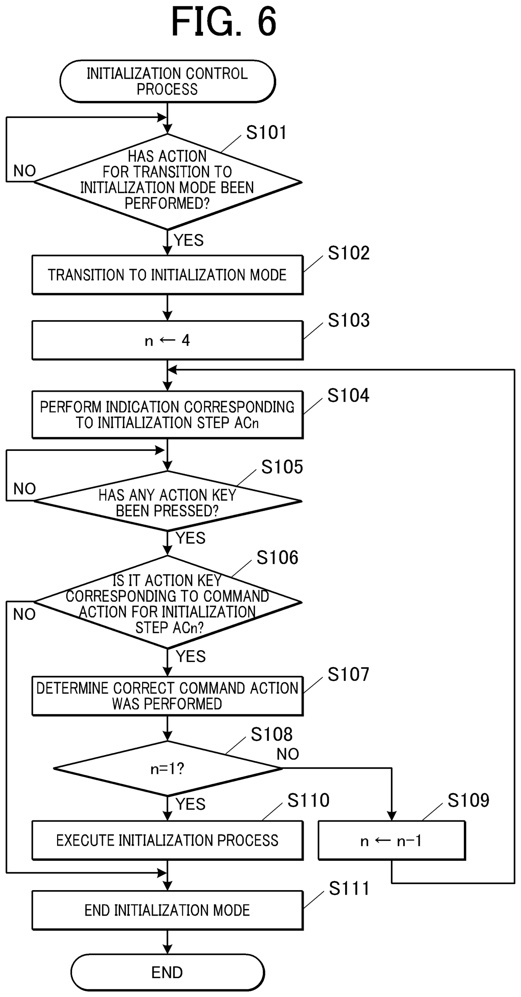

Referring to Fig. 6, an initialization control process is described. The initialization control process is executed by the CPU 10 to operate the electronic timepiece 1 as described above. The initialization control process is executed when the electronic timepiece 1 operates normally, such as indicating time. When the initialization control process starts, the CPU 10 repeats determining whether a certain action for transitioning to the initialization mode has been performed (step S101). In this embodiment, when the action key S1 is held (pressed) for ten seconds while the setting content is kept at August in the month setting of the date setting state, the CPU 10 determines that the action for transitioning to the initialization mode is performed. When determining that such an action has been performed (step S101: YES), the CPU 10 causes the electronic timepiece 1 to transition to the initialization mode (step S102) and executes the subsequent steps S103 to S111. The CPU 10 assigns "4" to a variable "n" that represents a step number of an initialization step (step S103). The CPU 10 causes the display 50 to perform indication corresponding to the initialization step ACn (step S104). When the display 50 is an analog display, the CPU 10 sends control signals to the drive circuit of the display 50 so that the hands 51 to 53 rotate and indicate the positions corresponding to the initialization step, as shown in FIG. 4. For example, when "n" is 4 (when the initialization step is AC4), the CPU 10 rotates the hour hand 51 and the minute hand 52 to the positions of 11:15 and the second hand 53 to the position of 45 seconds. When the display 50 is a digital display, the CPU 10 sends control signals to the drive circuit of the display 50 so that the display panel 55 performs indication corresponding to the initialization step, as shown in FIG. 5. For example, when "n" is 4, the CPU 10 displays "AC4" on the display panel 55.

The CPU 10 repeats determining whether any of the action keys S1 to S4 has been pressed (step S105). When determining that any of the action keys S1 to S4 has been pressed (step S105: YES), the CPU 10 determines whether the pressed action key S corresponds to a predetermined correct command action for the initialization step Acn (step S106). Herein, the CPU 10 refers to the command action setting data 33 to identify the action key S associated with the initialization step ACn. The CPU 10 then determines whether the associated action key S is identical to the pressed action key S determined in step S105. When determining that the pressed action key S does not correspond to the correct command action for the initialization step ACn (step S106: NO), the CPU 10 determines that the correct command action has not been performed and ends the initialization mode (step S111) and ends the initialization control process. When determining that the pressed action key S corresponds to the correct command action for the initialization step ACn (step S106: YES), the CPU 10 determines that the correct command action has been performed in the initialization step ACn (step S107). The CPU 10 determines whether the variable n is "1", namely whether the current initialization step is the last initialization step AC1 (step S108). When determining that the variable n is not "1", namely that the current initialization step is any of the initialization steps AC2 to AC4 (step S108: NO), the CPU 10 assigns "n-1" to the variable n (step S109) and returns to step S104. When determining that the variable n is "1", namely that the current initialization step is the initialization step AC1 (step S108: YES), the CPU 10 determines that the predetermined command actions in the command action setting data 33 have been performed in the certain order and executes the initialization process (step S110). In the initialization process, the CPU 10 resets the operation setting data 32 to the initial state. The CPU 10 then ends the initialization mode (step S111) and ends the initialization control process.

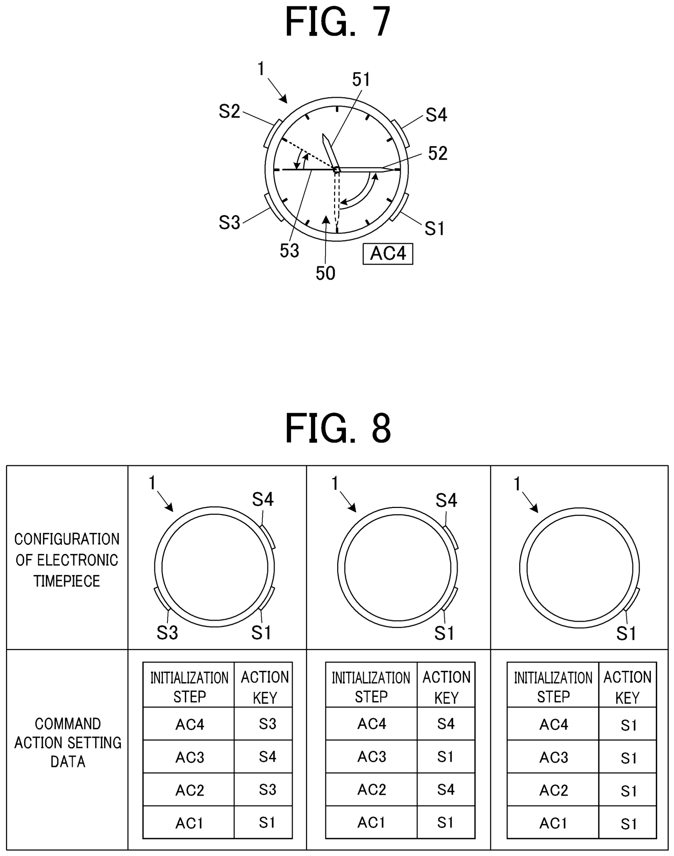

Next, a modification example 1 of the above embodiment is described. The aspects of the modification example 1 different from the above embodiment are described, whereas the aspects common with the embodiment are not described (the same applies to modification examples 2 to 4 described later). In the above embodiment, the CPU 10 immediately ends the initialization mode when an action other than the correct command action in the certain order is performed in the initialization mode. On the other hand, in the modification example 1, when an action other than the correct command action is performed, the CPU 10 cancels (invalidates) the action and causes the display 50 to indicate that an invalid action was performed. The invalidity indication may include moving the hands 51 to 53 the same way as the case where the correct command action has been performed and returning the hands 51 to 53 to their previous positions. FIG. 7 shows an example of the invalidity indication when, in the initialization step AC4, an action key S other than the correct action key S2 has been pressed. This invalidity indication includes (i) moving the minute hand 52 from the position of 15 minutes to the position of 30 minutes and returning the minute hand 52 back to the position of 15 minutes and (ii) moving the second hand 53 from the position of 45 seconds to the position of 50 seconds and returning the second hand 53 back to the position of 45 seconds. By seeing this invalidity indication, the user can recognize that he/she has performed an incorrect command action and retry the correct command action. When the display 50 is a digital display, the CPU 10 causes the display 50 to perform certain digital indication that an invalid action has been performed (e.g., display "Err").

Next, a modification example 2 of the above embodiment is described. The modification example 2 may be combined with the modification example 1. The modification example 2 differs from the above embodiment in that the electronic timepiece 1 has three or less action keys S. When the number of action keys S is three or less, the four command actions and their order registered in the command action setting data 33 are changed so as to correspond to the provided action keys S. For example, when the electronic timepiece 1 has three action keys S (S1, S3, and S4) as shown on the left in FIG. 8, the correct command actions in the initialization steps AC4 to AC1 are pressing the action keys S3, S4, S3, and S1, respectively. When the electronic timepiece 1 includes two action keys S (S1 and S4) as shown at the center in FIG. 8, the correct command actions in the initialization steps AC4 to AC1 are pressing the action keys S4, S1, S4 and S1, respectively. When the electronic timepiece 1 includes only a single action key S1 as shown on the right in FIG. 8, the correct command actions in the initialization steps AC4 to AC1 are pressing the action key S1, S1, S1, and S1, respectively. Since the number of necessary command actions (four) is unchanged regardless of the model, initialization by mishandling can be effectively avoided for models having less action keys S.

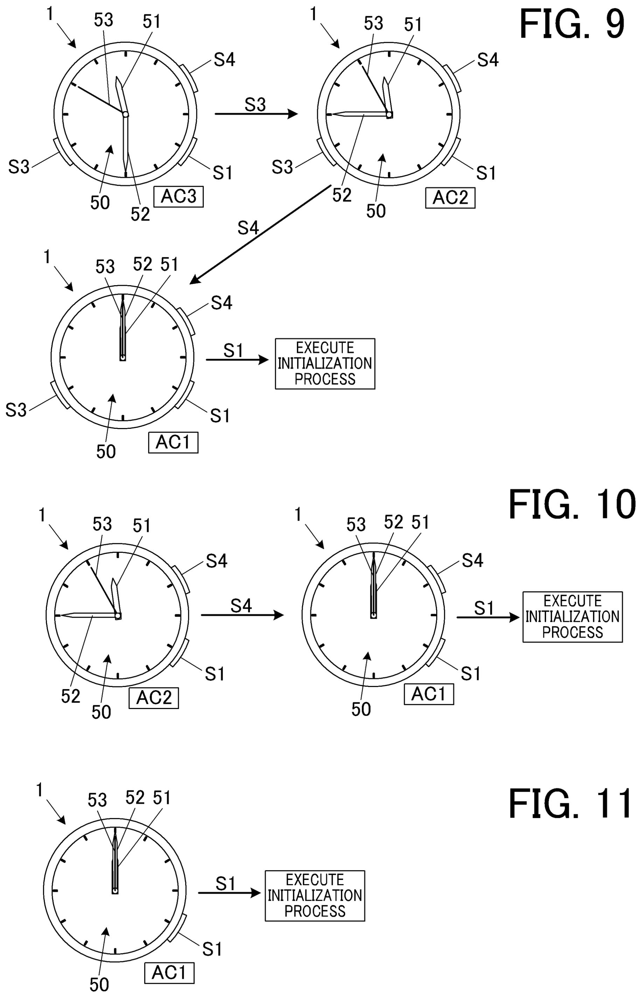

When the number of action keys S is three or less, the number of initialization steps to execute the initialization process (i.e., the number of command actions required to execute the initialization process) may be equal to the number of action keys S. In this case, a command action(s) corresponding to an action key S not provided to the electronic timepiece 1 may be excluded from the command actions in FIG. 3. For example, when the electronic timepiece 1 includes three action keys S1, S3, and S4 as shown in FIG. 9, the command action using the action key S2 in FIG. 3 is deleted. Accordingly, the initialization steps consist of three steps of AC3 to AC1, and the initialization step after transitioning to the initialization mode is AC3. Therefore, according to the electronic timepiece 1 shown in FIG. 9, the initialization process is executed when the command actions of pressing the action keys S3, S4, and S1 are performed in the respective initialization steps of AC3 to AC1. When the electronic timepiece 1 includes two action keys S1 and S4 as shown in FIG. 10, the command actions using the action keys S2 and S3 in FIG. 3 are deleted. Accordingly, the initialization steps consist of two steps of AC2 to AC1, and the initialization step after transitioning to the initialization mode is AC2. Therefore, according to the electronic timepiece 1 shown in FIG. 10, the initialization process is executed when the command actions of pressing the action keys S4 and S1 are performed in the respective initialization steps AC2 and AC1. When the electronic timepiece 1 includes a single action key S1 as shown in FIG. 11, the command action using the action keys S2 to S4 shown in FIG. 3 are deleted. Accordingly, there is only one initialization step (AC1). Therefore, according to the electronic timepiece 1 shown in FIG. 11, the initialization process is executed when the command action of pressing the action key S1 is performed in the initialization step AC1. According to such a method, the user can execute the initialization process of a model having three or less action keys S by remembering command actions of four action keys.

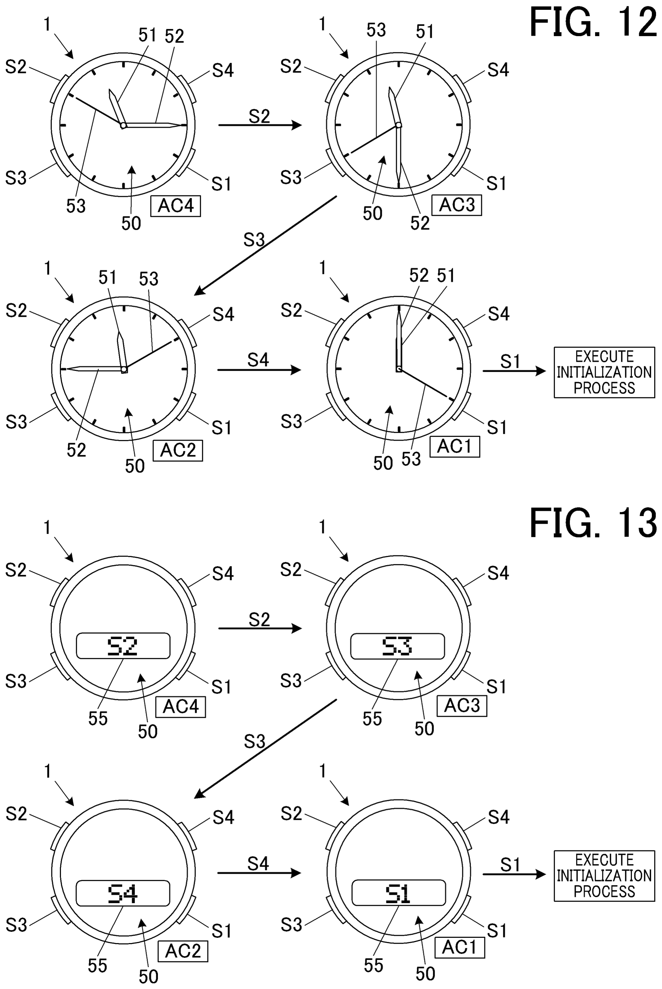

Next, a modification example 3 of the above embodiment is described. The modification example 3 may be combined with at least either the modification example 1 or the modification example 2. The modification example 3 differs from the above embodiment in the contents indicated by the display 50 in each initialization step. In the modification example 3, the CPU 10 identifies the next command action to be performed next among the command actions according to the certain order and causes the display 50 to indicate the action key S corresponding to the next command action among the action keys S1 to S4. In other words, in each initialization step, the CPU 10 causes the display 50 to indicate the action key S corresponding to the correct command action. As shown in FIG. 12, when the electronic timepiece 1 includes the analog display 50, one of the hands 51 to 53 (the second hand 53 in FIG. 12) indicates the action key S corresponding to the correct command action. Since the action keys S1 to S4 are provided at four o'clock, ten o'clock, eight o'clock, and two o'clock, respectively, the second hand 53 can indicate the action keys S1 to S4 by indicating four o'clock, ten o'clock, eight o'clock, and two o'clock, respectively. In the example of FIG. 12, the CPU 10 positions the second hand 53 at ten o'clock, eight o'clock, two o'clock, and four o'clock in the respective initialization steps of AC4 to AC1, thereby causing the second hand 53 to sequentially indicate the action keys S2, S3, S4, and S1 corresponding to the correct command actions. In the respective initialization steps, the hour hand 51 and the minute hand 52 may be positioned as shown in FIG. 4. For another example, the hour hand 51 and the minute hand 52 may be positioned not to indicate the action key S corresponding to the correct command action (e.g., at the position of 12 o'clock). As shown in Fig. 13, when the electronic timepiece 1 includes the digital display 50, the CPU 10 displays, on the display panel 55, "S2", "S3", "S4", and "S1" that represent the action keys S corresponding to the correct command actions in the respective initialization steps AC4 to AC1. In the initialization steps AC4 to AC1, the display panel 55 may also display contents corresponding to the number of remaining command actions, such as "AC4 S2", "AC3 S3", "AC2 S4" and "AC1 S1", respectively. By seeing the indications of Fig. 12 or Fig. 13 and pressing the action key S shown on the display in order, the user can perform the correct command actions to initialize the electronic timepiece 1.

In the modification example 3, step S104 of the initialization control process shown in FIG. 6 is modified as follows. In the modified step S104, the CPU 10 refers to the command action setting data 33 and identifies the action key S corresponding to the correct command action in the initialization step ACn. The CPU 10 then sends control signals to the display 50 and causes the display 50 to indicate the identified action key S. In step S104, the CPU 10 may also cause the display 50 to display contents corresponding to the number of remaining command actions.

Next, a modification example 4 of the above embodiment is described. The modification example 4 is a further modification of the modification example 3. The modification example 4 may be combined with at least either the modification example 1 or the modification example 2. In the modification example 4, the CPU 10 changes at least either the combination of command actions required to execute the initialization process or the certain order of command actions, each time the electronic timepiece 1 transitions to the initialization mode. For example, multiple patterns of combinations of command actions and certain orders may be prepared and stored in the memory 30 beforehand, and the CPU 10 may select one pattern every time the electronic timepiece 1 transitions to the initialization mode. In this case, the CPU 10 may select one of the patterns, based on a numerical value corresponding to the time of transition to the initialization mode (e.g., the digit in the ones place of seconds, the direction of one of the hands). For another example, the CPU 10 may change the patterns such that at least either the combination of command actions or the certain order is randomly determined every time. A combination of command actions may include two or more actions on at least one of the action keys S1 to S4. In each initialization step, the CPU 10 causes the display 50 to indicate the action key S corresponding to the correct command action, as in the modification example 3. Even if the command actions and/or their order are changed every time, the user can perform correct command actions to execute the initialization process by following the indications on the display 50.

As described above, the electronic timepiece 1 of this embodiment includes the display 50, the action receiver 60, and the CPU 10. The CPU 10 receives certain command actions in a state where the electronic timepiece 1 operates in a certain initialization mode. The CPU 10 executes the initialization process of initializing the electronic timepiece 1 when the command actions are performed on the action receiver 60 in a certain order in the initialization mode. Each time at least part of the command actions is performed in the certain order, the CPU 10 causes the display 50 to perform certain indication.

According to the embodiment, the electronic timepiece 1 performs certain indication for each command action to notify the user of the progress of command actions or guide the user to the next command action. Thus, the electronic timepiece 1 assists the user in smoothly performing command actions, which are complicated to prevent initialization by mishandling. Assisting the user's actions according to the embodiment is beneficial in terms of the following technical background. Conventionally, bugs or freezes that require initialization (all clear) are less likely to occur in a simple wristwatch having only a clock function. As a wider variety of functions have been added to timepieces, such as an advanced display function, a function of obtaining position information using global positioning system (GPS) satellite signals, and a pulse sensing function, the processor is required to handle higher-load processing, which tend to cause bugs and freezes. As a result, initialization is required more frequently, and time and effort for sending or bringing the electronic timepiece to the manufacturer for initialization cannot be ignored. It is therefore greatly beneficial for the user to be able to initialize the electronic timepiece at hand. In terms of such a background, the configuration of this embodiment can effectively assist actions for initialization, which are often performed by the user. Further, an analog electronic timepiece, which cannot digitally display contents on a liquid crystal display, is not able to display a setting screen to show setting contents or actions. If initialization of an analog timepiece requires complicated actions including multiple initialization steps, the user cannot smoothly initialize the timepiece. According to the configuration of this embodiment, the user can be suitably assisted in initializing an analog electronic timepiece. On the other hand, an electronic timepiece having advanced display functions, such as a smartwatch, can receive actions on the setting screen to execute initialization. The user assist function according to the configuration of this embodiment is especially beneficial to general electronic timepieces that do not have such advanced display functions.

Further, the certain indication indicates the count value of the counter that decreases or increases each time a command action is performed in a certain order. Such an indication can notify the user of the number of remaining command actions required to execute the initialization process. By referring to the indication, the user can perform the command actions while checking the progress of the command actions. If the user knows correct command actions and their order, the user can recognize the next correct command action based on the progress.

Further, the display 50 includes the hands 51 to 53. Each time the command action is performed in the certain order, the CPU 10 causes the hands 51 to 53 to indicate certain positions, thereby causing the display 50 to perform the certain indication. Each time the number of unperformed command actions among multiple command actions decreases, the certain positions come closer to a certain end position. Such indication can notify the user of the progress of multiple command actions in a visually and intuitively understandable manner.

Further, the action receiver 60 includes multiple action keys S. Each of the command actions is an action on a specific action key S among the action keys S. In the modification examples 3 and 4, the CPU 10 identifies the next command action to be performed next among the command actions in the certain order and, as the certain indication, causes the display 50 to indicate the action key S corresponding to the next command action among the action keys S. Such indication by the display 50 can guide the user to a correct command action. By pressing the indicated action key S in order, the user can perform correct command actions. Thus, even a user unfamiliar with initialization actions can perform correct command actions in the respective initialization steps without referring to manuals or instructions.

Further, the display 50 includes the second hand 53, and the action keys S are provided at positions that can be indicated by the second hand 53. In the modification examples 3 and 4, the CPU 10 causes the second hand 53 to indicate the action key S corresponding to the next command action among the action keys S as the certain indication. Such indication can notify the user of the action key S corresponding to the next correct command action in a visually and intuitively understandable manner.

Further, the CPU 10 receives the command actions when the electronic timepiece 1 operates in a certain initialization mode. In the modification example 4, the CPU 10 changes at least either the combination of command actions or the certain order of command actions each time the electronic timepiece 1 transitions to the initialization mode. According to such a configuration, the initialization process is not executed unless the user intentionally performs the command actions that are changed every time. Therefore, initialization by mishandling is less likely to occur. Even if the command actions and/or their order are changed, the user can perform correct command actions to initialize the electronic timepiece 1 by following the indication on the display 50.

Further, the CPU 10 may end the initialization mode when an action other than the command actions in the certain order is performed in the initialization mode. Thus, initialization by mishandling is less likely to occur.

Further, in the modification example 1, when an action other than the command actions in the certain order is performed in the initialization mode, the CPU 10 may cancel the action and cause the display 50 to indicate that an invalid action has been performed. Such invalidity indication allows the user to recognize that he/she performed an incorrect command action and retry the correct command action.

Further, according to the method of controlling the electronic timepiece 1 of the embodiment, the CPU 10 executes the above process to assist the user actions for initialization. Further, the program 31 of the embodiment causes the CPU 10 to execute the above process. Thus, the user actions for initialization can be assisted.

The above embodiment is not intended to limit the present disclosure and can be variously modified. For example, the certain indication performed by the display 50 each time a command action is performed is not limited to the examples in the above embodiment. For example, a progress bar or a progress circle may be used to indicate the progress of command actions.

Further, the command actions are not limited to pressing one of the action keys S1 to S4 but may include pulling out, pushing in, or rotating the crown 61.

Further, the electronic timepiece 1 may include a notification unit. The notification unit may perform notification each time a command action is performed, along with the display 50 performing certain indication. The notification unit may perform notification by sound, vibration, light emission, or a combination of these.

Further, the initialization process is not limited to resetting the operation setting data 32 to its initial state. The initialization process may be any process that resets at least part of the settings made on the electronic device after shipment.

Although the electronic device is the electronic timepiece 1 as an example, the electronic device is not limited to this. The electronic device may be a wearable device other than a wristwatch, or a portable device such as a smartphone, tablet, or laptop.

In the above description, the flash memory of the memory 30 is used as an example of a computer-readable medium that stores the program of the present disclosure. However, the computer-readable medium is not limited to this example. As other computer-readable media, information recording media such as a hard disk drive (HDD), a solid state drive (SDD), and CD-ROM can be applied. Further, carrier wave is also applicable to this disclosure as a medium for providing data of the program of this disclosure via communication lines.

Also, the detailed configuration and detailed operations of the components constituting the electronic timepiece 1 in the above embodiment can be appropriately modified without departing from the scope of the present disclosure. Although the embodiment of the present disclosure has been described, the scope of the present disclosure is not limited to the embodiment described above but encompasses the scope of the disclosure recited in the claims and the equivalent thereof.

## Claims

1. An electronic device (1) comprising:
a display (50);
an action receiver (60); and
at least one processor (10), wherein:
the at least one processor receives certain command actions in a state where the electronic device operates in a certain initialization mode,
in response to the command actions being performed on the action receiver in a certain order in the initialization mode, the at least one processor executes an initialization process of initializing the electronic device, and
each time at least part of the command actions is performed in the certain order, the at least one processor causes the display to perform certain indication.

2. The electronic device according to claim 1, wherein the certain indication indicates a count value of a counter that decreases or increases each time the at least part of the command actions is performed in the certain order.

3. The electronic device according to claim 1 or claim 2, wherein:
the display includes a hand (51 to 53),
each time the at least part of the command actions is performed in the certain order, the at least one processor causes the hand to indicate a certain position as the certain indication, and
each time a number of unperformed command actions among the command actions decreases, the certain position comes closer to a certain end position.

4. The electronic device according to any one of claims 1 to 3, wherein:
the action receiver includes action keys (S1 to S4),
each of the command actions is an action on a specific action key among the action keys, and
the at least one processor identifies a next command action to be performed next in the certain order among the command actions and causes the display to indicate an action key corresponding to the next command action among the action keys as the certain indication.

5. The electronic device according to claim 4, wherein:
the display includes a hand (51 to 53),
the action keys are provided in directions that can be indicated by the hand, and
the at least one processor causes the hand to indicate an action key corresponding to the next command action among the action keys as the certain indication.

6. The electronic device according to any one of claims 1 to 5, wherein:
the at least one processor receives the command actions only in the state where the electronic device operates in the initialization mode, and
each time the electronic device transitions to the initialization mode, the at least one processor changes at least either a combination of the command actions or the certain order.

7. The electronic device according to any one of claims 1 to 6, wherein:
the at least one processor receives the command actions only in the state where the electronic device operates in the initialization mode, and
in response to an operation other than the command actions in the certain order being performed in the initialization mode, the at least one processor ends the initialization mode.

8. The electronic device according to any one of claims 1 to 7, wherein:
the at least one processor receives the command actions only in the state where the electronic device operates in the initialization mode, and
in response to an operation other than the command actions in the certain order being performed in the initialization mode, the at least one processor cancels the performed action and causes the display to indicate that an invalid action has been performed.

9. A method for a computer (10) of an electronic device (1) including a display (50) and an action receiver (60), the method comprising:
receiving certain command actions in a state where the electronic device operates in a certain initialization mode,
executing an initialization process of initializing the electronic device in response to the command actions being performed on the action receiver in a certain order in the initialization mode; and
causing the display to perform certain indication each time at least part of the command actions is performed in the certain order.

10. A program (31) for a computer (10) of an electronic device (1) that includes a display (50) and an action receiver (60), the program causing the computer to:
receive certain command actions in a state where the electronic device operates in a certain initialization mode,
execute an initialization process of initializing the electronic device in response to the command actions being performed on the action receiver in a certain order in the initialization mode, and
cause the display to perform certain indication each time at least part of the command actions is performed in the certain order.
